# EUROPÄISCHE PATENTSCHRIFT

(11) **EP 2 871 069 B1**
(45) Veröffentlichungstag und Bekanntmachung des Hinweises auf die Patenterteilung: **19.12.2018**
(21) Anmeldenummer: 14181491.3
(22) Anmeldetag: 20.08.2014
(51) Int. Cl.: B60C 9/18, B60C 9/22

(54) **Fahrzeugluftreifen**
Pneumatic tyres for a vehicle
Pneumatiques de véhicule

(30) Priorität: 07.11.2013 DE 102013222665
(43) Veröffentlichungstag der Anmeldung: 13.05.2015
(73) Patentinhaber: Continental Reifen Deutschland GmbH, 30165 Hannover (DE)
(72) Erfinder: Volk, Heiner, 31535 Neustadt (DE); Ludwig, Reinhard, 31848 Bad Münder (DE); Kramer, Thomas, 32049 Herford (DE)
(74) Vertreter: Finger, Karsten

(56) Entgegenhaltungen:
- EP-A2- 0 287 496
- DE-A1- 2 452 106
- US-A- 5 783 003

## Beschreibung

Die Erfindung betrifft einen Fahrzeugluftreifen radialer Bauart mit einem Laufstreifen, einer Radialkarkasse, einem Gürtelverband mit mindestens zwei Gürtellagen und mit zumindest einer Gürtelbandagenlage, welche radial außerhalb des Gürtelverbandes angeordnet ist und Festigkeitsträger aufweist, wobei die Festigkeitsträger etwa in Umfangsrichtung des Reifens längserstreckt sind und in Festigkeitsträgerabschnitte unterbrochen angeordnet sind, wobei diese Festigkeitsträgerabschnitte derart in der Gürtelbandagenlage angeordnet sind, dass -über die axiale Breite der Gürtelbandagenlage betrachtet- im Mittenbereich eine geringere Umfangssteifigkeit als in den beiden an den Mittenbereich angrenzenden Schulterbereichen erhalten ist.

Ein derartiger Fahrzeugluftreifen ist sowohl aus der EP 0 287 496 A2 als auch aus der DE 24 52 106 A1 bekannt.

Weiterhin ist aus der EP-B-0 828 619 ein Fahrzeugluftreifen bekannt, der für die Bandagenlage Stahlkorde als Festigkeitsträger verwendet, welche diskontinuierlich, also durch Querschnitte eines kontinuierlichen Festigkeitsträgers in einzelne Festigkeitsträgerabschnitte unterbrochen angeordnet sind. Die Festigkeitsträgerabschnitte sind in Umfangsrichtung hintereinander und beabstandet voneinander angeordnet. In Aufsicht auf diese Bandagenlage bilden die Festigkeitsträgerabschnitte einen "Mauerverband", indem die Unterbrechungen von in axialer Richtung benachbarten Festigkeitsträgerabschnitten nicht auf der gleichen Höhe liegen.

Die Bandagenlage dient u.a. dazu, im Betrieb des Reifens ein Reifenwachstum in Radialrichtung des Reifens zu verhindern. Dieses ist insbesondere für Hochgeschwindigkeitsreifen wichtig. Die Verwendung von hochmoduligen Festigkeitsträgern ist für den Erhalt einer großen Umfangssteifigkeit und somit der Verhinderung des Reifenwachstums von Vorteil. Jedoch müssen diese hochmoduligen Festigkeitsträger im unvulkanisierten Reifen derart dehnbar sein, dass eine Erhebung in die Reifenvulkanisierform möglich ist.

Durch die diskontinuierliche Anordnung der Festigkeitsträger in Form von in Umfangsrichtung hintereinander angeordneten Festigkeitsträgerabschnitten ist erreicht, dass bei der Produktion des Reifens der Reifenrohling gut zum Heizen in die Vulkanisierform erhoben werden kann. Bei dieser Erhebung müssen die Festigkeitsträger der Gürtelbandage in Umfangsrichtung um den Betrag der Erhebung von etwa 1% bis 4% gedehnt werden. In dem Mittenbereich ist die geforderte Dehnung größer als in den Schulterbereichen. Es können auch Festigkeitsträgermaterialien zum Einsatz kommen, die bei kontinuierlicher Festigkeitsträgeranordnung nicht hätten eingesetzt werden können, da deren Bruchdehnung zu gering ist.
Durch die diskontinuierliche Anordnung in Festigkeitsträgerabschnitten kann eine Längung in Umfangsrichtung dadurch ausgeführt werden, dass die Festigkeitsträgerabschnitte aneinander abgleiten, da sie vor dem Heizprozess nur durch Rohgummi miteinander verbunden sind. Nach dieser Längung haben sich die Beabstandungen zwischen zwei in Umfangsrichtung hintereinander angeordneten Festigkeitsträgerabschnitten vergrößert ohne den Festigkeitsträger als Solches wesentlich zu dehnen. Nach dem Vulkanisierprozess des Reifens ist die Gummimatrix fest mit den Festigkeitsträgerabschnitten verbunden, so dass die Eigenschaften der Festigkeitsträger zum Einsatz kommen.

Der Erfindung liegt die Aufgabe zugrunde, einen kostengünstigen Fahrzeugluftreifen zu schaffen, dessen Bandagenlage hochmodulige Festigkeitsträger aufweist, durch welche die "richtige" dynamische Kontur des Reifens so beeinflusst wird, dass vorteilhafte Performanceeigenschaften des Reifens wie in Bezug auf den Rollwiderstand, das Aquaplaning oder die Hochgeschwindigkeit erreicht werden.

Gelöst wird die gestellte Aufgabe erfindungsgemäß dadurch, dass die axiale Beabstandung der Festigkeitsträgerabschnitte in den Schulterbereichen kleiner als in dem Mittenbereich ist, wobei die Länge der Festigkeitsträgerabschnitte etwa gleich groß oder in den Schulterbereichen größer ist.

Die beiden Schulterbereiche nehmen je zwischen 20% und 30% der axialen Breite der Bandagenlage ein, während der Mittenbereich zwischen 40% und 60% der axialen Breite der Bandagenlage einnimmt. Die beiden Schulterbereiche weisen dabei etwa die gleiche oder aber ungleiche Breite auf. Die axiale Breite bemisst sich in axialer Richtung und nicht konturparallel.
Die Umfangssteifigkeit der Bandagenlage errechnet sich aus dem Produkt von Kordmodul und Fadendichte.

Erfindungsgemäß wird in der Bandagenlage ein in Material und Konstruktion gleicher Festigkeitsträger in allen Festigkeitsträgerabschnitten eingesetzt. Um die gewünschten Umfangssteifigkeiten von Schulter- und Mittenbereich zu erhalten, werden die Festigkeitsträgerabschnitte entsprechend ihrer Länge und/oder Beabstandung zueinander gewählt und angeordnet. Hierdurch sind eine Abstimmung der Reifenkontur bei Hochgeschwindigkeit und eine gleichmäßigere Druckverteilung in der Reifenaufstandsfläche ermöglicht. Die variable Umfangssteife über die axiale Breite unterstützt hohe Performance für Abrieb, Hochgeschwindigkeit und Handling. Bei Hochgeschwindigkeit wird die Schulter weniger Wachstum erfahren und damit erreicht der Reifen eine höhere Geschwindigkeit.

Die Steifigkeit in Umfangsrichtung hängt von der Länge der Festigkeitsträgerabschnitte ab. Je größer die Länge, desto höher die Umfangssteifigkeit. Vorzugsweise sind die Festigkeitsträgerabschnitte im Schulterbereich mindestens 10%, bevorzugt 30%, besonders bevorzugt 50% länger als die Festigkeitsträgerabschnitte im Mittenbereich.

Vorteilhaft ist es, wenn die Festigkeitsträgerabschnitte aus Stahl bestehen und Monofilamente oder Korde sind. Es ist trotz des hohen Moduls von Stahl eine Einformung des Reifens in die Heizform möglich, ohne die Bruchdehnung des Stahlfestigkeitsträgers zu erreichen. Eine vorteilhafte Konstruktion eines Stahlfestigkeitsträgers ist beispielsweise 2x0.3.

Alternativ bestehen die Festigkeitsträgerabschnitte aus nicht-metallischen, hochmoduligen textilen Materialien wie beispielsweise Aramid oder Hybridkonstuktionen enthaltend Aramid. Es ist trotz des hohen Moduls von Aramid eine Einformung des Reifens in die Heizform möglich, ohne die Bruchdehnung des Aramidfestigkeitsträgers zu erreichen. Zudem weisen die textilen Materialien eine Korrosionsfreiheit und ein geringes Gewicht auf.

Weitere Merkmale, Vorteile und Einzelheiten der Erfindung werden nun anhand der Zeichnungen, die schematische Ausführungsbeispiele darstellen, näher beschrieben. Dabei zeigen die
Fig. 1 einen Querschnitt durch einen Fahrzeugluftreifen;
Fig. 2 - nicht zur Erfindung gehöhrend -eine Aufsicht auf eine bis auf die Festigkeitsträgerabschnitte abgedeckte Bandagenlage des betriebsbereiten Fahrzeugluftreifens der Fig. 1;
Fig. 3 eine Aufsicht auf eine andere bis auf die Festigkeitsträgerabschnitte abgedeckte Bandagenlage eines anderen betriebsbereiten Fahrzeugluftreifens.

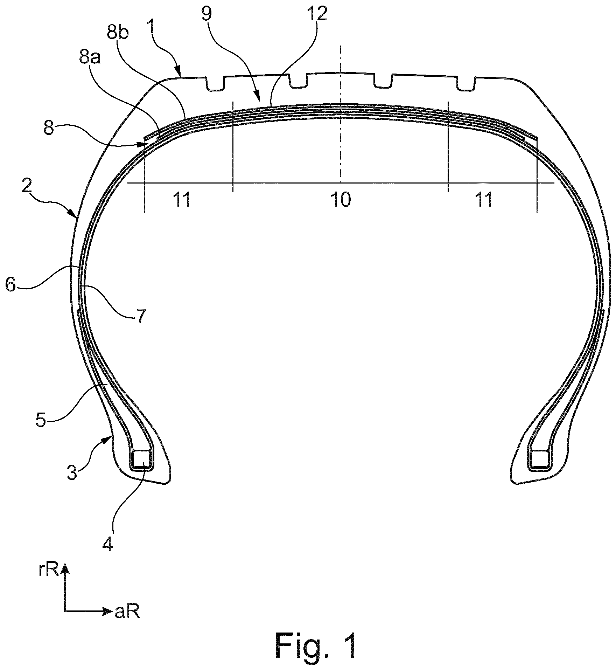

Der in **Fig.1** gezeigte Fahrzeugluftreifen ist ein Reifen für Personenkraftwagen radialer Bauart und weist einen Laufstreifen 1, Seitenwände 2, Wulstbereiche 3 mit Wulstkernen 4 und Wulstprofilen 5, ferner eine Karkasslage 6, welche die beiden Wulstkerne 4 umläuft, eine Innenschicht 7 sowie eine zwischen der Karkasslage 6 und dem Laufstreifen 1 angeordneten Gürtelverband 8 auf. Der Gürtelverband 8 weist bei der gezeigten Ausführungsform zwei Gürtellagen 8a und 8b auf, welche in bekannter Weise aus in eine Gummimischung eingebetteten, parallel zueinander verlaufenden Festigkeitsträgern aus Stahlkord bestehen können. Die Stahlkorde in der einen Gürtellage 8a verlaufen dabei gekreuzt zu den Stahlkorden in der anderen Gürtellage 8b und schließen mit der Reifenumfangsrichtung einen der üblichen Winkel in der Größenordnung von 20° bis 35° ein. Radial außerhalb der beiden Gürtellagen 8a, 8b befindet sich eine Bandagenlage 9 - eine cap-ply Lage - welche im Hochgeschwindigkeitsbetrieb des Reifens für eine gleichmäßigere Druckverteilung in der Reifenaufstandsfläche verantwortlich ist sowie durch ihre unterschiedliche Umfangssteifigkeit aufgrund der speziellen Anordnung von Festigkeitsträgerabschnitten 12 im Mittenbereich 10 im Vergleich zu den Schulterbereichen 11 eine hohe Performance für Abrieb, Hochgeschwindigkeit und Handling unterstützt.

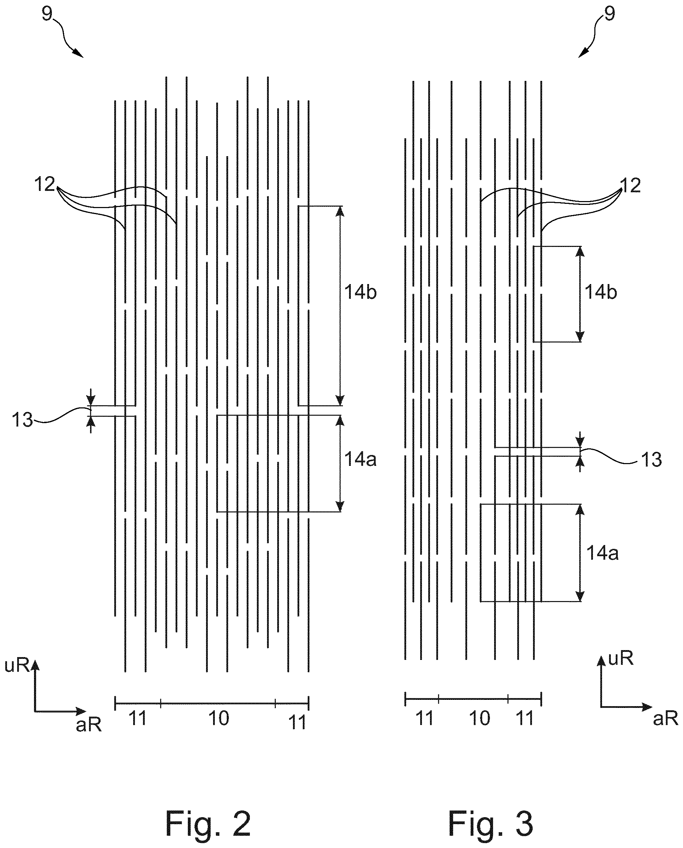

Die **Fig. 2** zeigt eine Aufsicht auf eine bis auf die Festigkeitsträgerabschnitte abgedeckte Bandagenlage des betriebsbereiten Fahrzeugluftreifens der Fig. 1, wobei die Fig. 2 jedoch nicht zur Erfindung gehört. Die Festigkeitsträger der Bandagenlage 9 sind etwa in Umfangsrichtung uR des Reifens längserstreckt und diskontinuierlich angeordnet, d.h. in Festigkeitsträgerabschnitte 12 unterbrochen. Zwei in Umfangsrichtung uR hintereinander angeordnete Festigkeitsträgerabschnitte 12 sind in einem bestimmten Abstand 13 zueinander angeordnet und berühren sich nicht. Die Festigkeitsträgerabschnitte 12 sind derart in der Gürtelbandagenlage 9 angeordnet, dass -über die axiale Breite der Gürtelbandagenlage 9 betrachtet- im Mittenbereich 10 eine geringere Umfangssteifigkeit als in den beiden an den Mittenbereich 10 angrenzenden Schulterbereichen 11 erhalten ist. Dieses ist dadurch erreicht, dass im Schulterbereich 11 Festigkeitsträgerabschnitte mit einer größeren Länge 14b als im Mittenbereich 10 angeordnet sind. Der Abstand 13 der Festigkeitsträgerabschnitte 12 in Umfangsrichtung sowie deren Beabstandung in axialer Richtung ist jeweils etwa gleich groß. Die Festigkeitsträgerabschnitte 12 im Schulterbereich 11 weisen eine Länge 14b auf, die etwa 1,5 mal so groß wie die Länge 14a der Festigkeitsträgerabschnitte im Mittenbereich 10 ist. Die Festigkeitsträger der Festigkeitsträgerabschnitte 12 bestehen aus Stahl-Korden der Konstruktion 2x0.30.

Die **Fig. 3** zeigt eine Aufsicht auf eine andere bis auf die Festigkeitsträgerabschnitte 12 abgedeckte Bandagenlage 9. Die Gürtelbandage 9 der Fig. 3 unterscheidet sich von der Gürtelbandage der Fig. 2 darin, dass die axiale Beabstandung der Festigkeitsträgerabschnitte 12 in den Schulterbereichen 11 kleiner als in dem Mittenbereich 10 ist, wobei die Länge 14a, 14b der Festigkeitsträgerabschnitte sowie deren Abstand 13 im Umfangsrichtung etwa gleich groß ist.

### Bezugszeichenliste

- 1: Laufstreifen
- 2: Seitenwand
- 3: Wulstbereich
- 4: Wulstkern
- 5: Wulstprofil
- 6: Karkasslage
- 7: Innenschicht
- 8: Gürtelverband
- 8a: Gürtellage
- 8b: Gürtellage
- 9: Bandagenlage
- 10: Mittenbereich
- 11: Schulterbereich
- 12: Festigkeitsträgerabschnitte
- 13: Abstand in Umfangsrichtung zwischen zwei Festigkeitsträgerabschnitten
- 14a: Länge des Festigkeitsträgerabschnittes im Mittenbereich
- 14b: Länge des Festigkeitsträgerabschnittes im Schulterbereich

- aR: axiale Richtung
- rR: radiale Richtung
- uR: Umfangsrichtung

## Patentansprüche

1. Fahrzeugluftreifen radialer Bauart mit einem Laufstreifen (1), einer Radialkarkasse (6), einem Gürtelverband (8) mit mindestens zwei Gürtellagen (8a, 8b) und mit zumindest einer Gürtelbandagenlage (9), welche radial außerhalb des Gürtelverbandes (8) angeordnet ist und Festigkeitsträger aufweist, wobei die Festigkeitsträger etwa in Umfangsrichtung (uR) des Reifens längserstreckt sind und in Festigkeitsträgerabschnitte (12) unterbrochen angeordnet sind,
wobei diese Festigkeitsträgerabschnitte (12) derart in der Gürtelbandagenlage (9) angeordnet sind, dass -über die axiale Breite der Gürtelbandagenlage (9) betrachtet- im Mittenbereich (10) eine geringere Umfangssteifigkeit als in den beiden an den Mittenbereich (10) angrenzenden Schulterbereichen (11) erhalten ist, wobei die Umfangssteifigkeit der Bandagenlage das Produkt von Kordmodul und Fadendichte ist, **dadurch gekennzeichnet, dass** die axiale Beabstandung der Festigkeitsträgerabschnitte (12) in den Schulterbereichen (11) kleiner als in dem Mittenbereich (10) ist, wobei die Länge (14a, 14b) der Festigkeitsträgerabschnitte (12) etwa gleich groß oder in den Schulterbereichen (11) größer ist.

2. Fahrzeugluftreifen nach Anspruch 1, **dadurch gekennzeichnet, dass** die Umfangssteifigkeit im Mittenbereich über die axiale Breite etwa gleich groß ist und/ oder dass die Umfangssteifigkeit im Schulterbereich über die axiale Breite etwa gleich groß ist.

3. Fahrzeugluftreifen nach Anspruch 1, **dadurch gekennzeichnet, dass** die Umfangssteifigkeit von der Mitte zur Schulter einen variablen Übergangsbereich aufweist.

4. Fahrzeugluftreifen nach Anspruch 1, **dadurch gekennzeichnet, dass** die axiale Beabstandung der Festigkeitsträgerabschnitte (12) im Mittenbereich (10) 20% - 100% größer ist als in den Schulterbereichen (11), bevorzugt 25% - 35% größer ist als in den Schulterbereichen (11).

5. Fahrzeugluftreifen nach einem der Ansprüche 1 bis 4, **dadurch gekennzeichnet, dass** die Festigkeitsträgerabschnitte (12) aus Stahl bestehen und Monofilamente oder Korde sind.

6. Fahrzeugluftreifen nach einem der Ansprüche 1 bis 4, **dadurch gekennzeichnet, dass** die Festigkeitsträgerabschnitte (12) aus nicht-metallischen, hochmoduligen textilen Materialien wie beispielsweise Aramid oder Hybridkonstuktionen enthaltend Aramid bestehen, wobei die Festigkeitsträgerabschnitte einen Modul von > 2 cN/dtex, bevorzugt von etwa 3 cN/dtex, bei 2% Dehnung aufweisen.

## Claims

1. Pneumatic vehicle tyre of a radial type of construction, with a tread (1), a radial carcass (6), a breaker belt assembly (8) with at least two belt plies (8a, 8b) and with at least one belt bandage ply (9), which is arranged radially outside the breaker belt assembly (8) and has reinforcing elements, the reinforcing elements being made to linearly extend approximately in the circumferential direction (uR) of the tyre and arranged discontinuously in reinforcing element segments (12), these reinforcing element segments (12) being arranged in the belt bandage ply (9) in such a way that - when viewed over the axial width of the belt bandage ply (9) - a lesser circumferential stiffness is obtained in the middle region (10) than in the two shoulder regions (11) adjoining the middle region (10), the circumferential stiffness of the bandage ply being the product of cord modulus and filament density,
**characterized in that** the axial spacing of the reinforcing element segments (12) is smaller in the shoulder regions (11) than in the middle region (10), the length (14a, 14b) of the reinforcing element segments (12) being approximately equal or, in the shoulder regions (11), greater.

2. Pneumatic vehicle tyre according to Claim 1, **characterized in that** the circumferential stiffness in the middle region is approximately equal over the axial width and/or **in that** the circumferential stiffness in the shoulder region is approximately equal over the axial width.

3. Pneumatic vehicle tyre according to Claim 1, **characterized in that** the circumferential stiffness has a variable transitional region from the middle to the shoulder.

4. Pneumatic vehicle tyre according to Claim 1, **characterized in that** the axial spacing of the reinforcing element segments (12) in the middle region (10) is 20%-100% greater than in the shoulder regions (11), preferably 25-35% greater than in the shoulder regions (11).

5. Pneumatic vehicle tyre according to one of Claims 1 to 4, **characterized in that** the reinforcing element segments (12) consist of steel and are monofilaments or cords.

6. Pneumatic vehicle tyre according to one of Claims 1 to 4, **characterized in that** the reinforcing element segments (12) consist of non-metallic, high-modulus textile materials, such as for example aramid or hybrid constructions containing aramid, the reinforcing element segments having a modulus of > 2 cN/dtex, preferably of approximately 3 cN/dtex, at 2% elongation.

## Revendications

1. Pneumatique de véhicule de type radial comprenant une bande de roulement (1), une carcasse radiale (6), un ensemble ceinture (8) doté d'au moins deux nappes de ceinture (8a, 8b) et au moins une nappe de bandage de ceinture (9), laquelle est disposée radialement à l'extérieur de l'ensemble ceinture (8) et comprend des éléments de renforcement, les éléments de renforcement étant allongés approximativement dans la direction périphérique (uR) du pneumatique et étant disposés de manière discontinue dans des parties d'éléments de renforcement (12), ces parties d'éléments de renforcement (12) étant disposées dans la nappe de bandage de ceinture (9) de manière à obtenir, considéré sur la largeur axiale de la nappe de bandage de ceinture (9), une plus faible rigidité périphérique dans la région centrale (10) que dans les deux régions d'épaulement (11) adjacentes à la région centrale (10), la rigidité périphérique de la nappe de bandage de ceinture étant le produit du module de câble et de la densité de fils,
**caractérisé en ce que** l'espacement axial des parties d'éléments de renforcement (12) dans les régions d'épaulement (11) est inférieur à l'espacement axial dans la région centrale (10), la longueur (14a, 14b) des parties d'éléments de renforcement (12) étant approximativement identique ou supérieure dans les régions d'épaulement (11).

2. Pneumatique de véhicule selon la revendication 1, **caractérisé en ce que** la rigidité périphérique dans la région centrale est approximativement identique sur la largeur axiale et/ou la rigidité périphérique dans la région d'épaulement est approximativement identique sur la largeur axiale.

3. Pneumatique de véhicule selon la revendication 1, **caractérisé en ce que** la rigidité périphérique du centre à l'épaulement présente une plage de transition variable.

4. Pneumatique de véhicule selon la revendication 1, **caractérisé en ce que** l'espacement axial des parties d'éléments de renforcement (12) dans la région centrale (10) est supérieur de 20 % à 100 % à l'espacement axial dans les régions d'épaulement (11), de préférence supérieur de 25 % à 35 % à l'espacement axial dans les régions d'épaulement (11) .

5. Pneumatique de véhicule selon l'une quelconque des revendications 1 à 4, **caractérisé en ce que** les parties d'éléments de renforcement (12) sont constituées d'acier et sont des monofilaments ou des câbles.

6. Pneumatique de véhicule selon l'une quelconque des revendications 1 à 4, **caractérisé en ce que** les parties d'éléments de renforcement (12) sont constituées de matériaux textiles non métalliques à module élevé, par exemple de l'aramide ou des structures hybrides contenant de l'aramide, les parties d'éléments de renforcement présentant un module > 2 cN/dtex, de préférence d'environ 3 cN/dtex, à un allongement de 2 %.
